# EUROPÄISCHE PATENTANMELDUNG

(11) **EP 3 081 324 A1**
(43) Veröffentlichungstag der Anmeldung: **19.10.2016**
(21) Anmeldenummer: 16164957.9
(22) Anmeldetag: 12.04.2016
(51) Int. Cl.: B23B 7/06, B23B 3/06, B23Q 1/76

(54) **LANGDREHAUTOMAT MIT ZWEI NC-GESTEUERTEN BEARBEITUNGSACHSEN UND VERFAHREN ZUM BEARBEITEN VON WERKSTÜCKEN AUF EINEM LANGDREHAUTOMAT MIT ZWEI NC-GESTEUERTEN BEARBEITUNGSACHSEN**

(30) Priorität: 13.04.2015 DE 102015206567
(71) Anmelder: Schiess Tech GmbH, 10785 Berlin (DE)
(72) Erfinder:
(74) Vertreter: DREISS Patentanwälte PartG mbB

(57) **Zusammenfassung**

Es wird ein Langdrehautomat vorgestellt, der nur zwei Bearbeitungsachsen (X, Z) aufweist. Dadurch, dass der Werkzeugschlitten (13) einen sehr großen Verfahrweg hat, können mehrere Werkzeuge (21, 23, 25, 27, 29) an den Werkzeugschlitten befestigt werden und bei Bedarf das gewünschte Werkzeug in Eingriff mit dem entlang der Z-Achse verfahrbaren Werkstück gebracht werden.

## Beschreibung

Langdrehautomaten sind eine seit vielen Jahrzehnten bekannte und bewährte Bauart einer Drehmaschine. Sie ermöglicht die Bearbeitung von Werkstücken, deren Länge in Relation zu ihrem Durchmesser groß ist. Sie arbeiten nach dem so genannten Büchsen-Langdrehverfahren. Dabei ist eine in einem Spindelstock gespannte und angetriebene Materialstange durch eine Führungsbuchse geführt. Unmittelbar hinter der Führungsbuchse findet die Bearbeitung statt.

Aus der DE 10 2008 050 656 A1 ist ein Langdrehautomat mit drei NC-gesteuerten Achsen bekannt. Eine Bearbeitungsachse verläuft in Richtung der Drehachse des Spindelstocks und wird als Z-Achse bezeichnet. Der Spindelstock ist in Richtung der Z-Achse verfahrbar und führt bei der Drehbearbeitung die Vorschubbewegung aus. Die verbleibenden zwei Achsen (X-Achse und Y-Achse) des Langdrehautomaten verlaufen orthogonal zueinander und zur Z-Achse. Somit erstrecken sich die drei NC-gesteuerten Achsen (X, Y und Z) in die drei Raumesrichtungen.

An einem Werkzeugschlitten sind mehrere Werkzeuge in Richtung der Y-Achse beabstandet zueinander angeordnet (siehe zum Beispiel Figur 18 der DE 10 2008 050 656 A1).

Der Werkzeugschlitten ist in Richtung der Y-Achse versetzt zu der Drehachse des Spindelstocks versetzt. Damit die Schneiden der an dem Werkzeugschlitten befestigten (Dreh-)Werkzeuge das Werkstück erreichen, erstrecken sich die Schäfte der Dreh-Werkzeuge in Richtung der X-Achse. Die Zustellung der (Dreh-) Werkzeuge erfolgt durch Verfahren des Werkzeugschlittens in Richtung der Y-Achse.

Wenn die Bearbeitung des Werkstücks mit einem anderen an dem Werkzeugschlitten befestigten Werkzeug erfolgen soll, dann wird der Werkzeugschlitten in Richtung der Y-Achse verfahren.

Dieser Langdrehautomat hat drei NC-gesteuerte Achsen und benötigt für jede der drei Achsen Wegmesssysteme und Antriebe sowie eine geeignete Steuerung. Das verursacht erhebliche Kosten.

Ähnliche Maschinen-Konzepte sind aus der EP 1 321 212 A1 und der DE 196 21 406 A1 bekannt. Bei den aus diesen Druckschriften bekannten Langdreh-Automaten ist in Ergänzung zu den Schlitten an denen die Drehmeißel befestigt sind, ein Schlitten für nicht-angetriebene Bohrer angetriebene vorgesehen. Bei diesem Schlitten sind auf Spitzenhöhe nebeneinander mehrere Bohrfutter angeordnet. In die Bohrfutter können verschiedene Bohrer oder Senker eingespannt werden. Je nachdem welcher Bohrer oder Senker eingesetzt werden soll, wird der Schlitten senkrecht zu der Drehachse des Werkstücks so weit verfahren, bis der gewünschte Bohrer sich in der Drehachse des Werkstücks befindet. Dann wird das Werkstück in Drehung versetzt und der Spindelstock auf den Bohrer zubewegt, so dass im Zentrum des Werkstücks eine Bohrung entsteht.

Der Erfindung liegt die Aufgabe zugrunde einen Langdrehautomaten bereitzustellen, der nahezu die gleiche Leistungsfähigkeit wie ein herkömmlicher Langdrehautomat mit drei Bearbeitungsachsen erreicht und zu deutlich geringeren Kosten herstellbar ist.

Diese Aufgabe wird erfindungsgemäß bei einem Langdrehautomaten mit einem in Richtung einer Drehachse (Z-Achse) verschiebbaren Spindelstock, einer Führungsbuchse und einem Werkzeugschlitten, wobei der Werkzeugschlitten orthogonal zu der Drehachse (Z-Achse) des Spindelstocks in Richtung einer zweiten Achse (X-Achse) verschiebbar ist, wobei der Werkzeugschlitten orthogonal zu der Drehachse (Z-Achse) des Spindelstocks und in Richtung einer weiteren Achse (Y-Achse) versetzt (S) zu der Drehachse (Z-Achse) angeordnet ist, wobei an dem Werkzeugschlitten mehrere Befestigungspunkte für Werkzeuge ausgebildet sind, dadurch gelöst, dass die zweite Achse (X-Achse) sowohl zum Wechsel der Werkzeuge als auch zur Zustellung der (Dreh-)Werkzeuge eingesetzt wird.

Der erfindungsgemäße Langdrehautomat ermöglicht es, in Verbindung mit dem erfindungsgemäßen Verfahren nach den Ansprüchen 10 bis 13 und Drehwerkzeugen nach den Ansprüchen 15 ff, verschiedenste Werkstücke herzustellen, obwohl der erfindungsgemäße Langdrehautomat wesentlich einfacher aufgebaut und kostengünstiger in der Herstellung ist als herkömmliche Langdrehautomaten. Dies wird - kurz gesagt - dadurch erreicht, dass die X-Achse eine Doppelfunktion übernimmt, nämlich das Wechseln der Werkzeuge und die Zustellbewegung bei der Drehbearbeitung. Eine dritte NC-gesteuerte Achse kann dadurch ersatzlos entfallen.

Dadurch, dass an dem Werkzeugschlitten in Richtung der X-Achse mehrere Werkzeuge angeordnet werden können, ist es möglich, mit einer NC-gesteuerten Bearbeitungsachse des Werkzeugschlittens verschiedene Werkzeuge in Eingriff mit dem Werkzeug zu bringen. Dies wird dadurch erreicht, dass das Werkstück vom Spindelstock in die Führungsbuchse zurückgezogen wird, so dass die Werkzeuge in Richtung der X-Achse frei verfahren werden, ohne das Werkstück zu berühren. In dieser "zurückgezogenen" Position des Werkstücks kann nun dasjenige Werkzeug des Werkzeugschlittens, das den nächsten Bearbeitungsschritt ausführen soll, in unmittelbare Nähe der Drehachse des Spindelstocks verfahren werden. Die Schneidkante dieses gewünschten Werkzeugs ist jedoch soweit von der Drehachse entfernt, dass beim anschließenden Vorschieben des Werkstücks in dem Bearbeitungsraum eine Kollision von Werkstück und Werkzeug vermieden wird.

Wenn das gewünschte Werkzeug nun in unmittelbarer Nähe der Drehachse des Spindelstocks angekommen ist, dann wird das Werkstück wieder nach vorne aus der Führungsbuchse herausgeschoben und die Bearbeitung des Werkstücks mit dem gewünschten Werkzeug kann beginnen.

Zum Beispiel kann die Drehbearbeitung des Werkstücks mit Hilfe erfindungsgemäßer "abgewinkelter" Drehmeißel gemäß der Ansprüche 15 ff. durch Zustellung in Richtung der X-Achse erfolgen. Eine dritte NC-gesteuerte Achse ist nicht erforderlich.

Wenn nun ein anderes Werkzeug benutzt werden soll, dann wird das Werkstück wieder in die Führungsbuchse zurückgezogen und das neue gewünschte Werkzeug wird in unmittelbare Nähe der Drehachse des Spindelstocks gebracht.

Dadurch ist es möglich, nur mit einer Bewegungsachse des Werkzeugschlittens (X-Achse) sowohl die Zustellbewegung des Werkzeugs des im Eingriff mit dem Werkstück befindlichen Werkzeugs durchzuführen. Außerdem kann diese Bearbeitungsachse auch zum Wechseln des Werkzeugs genutzt werden. Dieser Vorgang findet immer zwischen den einzelnen Bearbeitungsschritten statt, und zwar dann, wenn zuvor das Werkstück in die Führungsbuchsenaufnahme zurückgezogen wurde.

Es können auf einem Werkzeugschlitten des erfindungsgemäßen Langdrehautomaten verschiedenste feststehende oder angetriebene Werkzeuge, seien es rechte oder linke Drehmeißel, Stechdrehmeißel, Gewindestrehler, aber auch Bohrer, Senker, Gewindebohrer oder Schneideisen angeordnet werden.
Wenn der Bohrer, der Gewindebohrer oder das Schneideisen nicht angetrieben sind, dann muss die Bearbeitungsrichtung dieser feststehenden Werkzeuge parallel zur Drehachse (Z-Achse) des Spindelstocks erfolgen. In diesem Fall wird dann beispielsweise eine zentrale Bohrung in das Werkstück eingebracht, indem ein Spiralbohrer genau in die Drehachse des Spindelstocks gebracht wird und in dieser Position der Werkzeugschlitten arretiert wird. Anschließend wird der Spindelstock und mit ihm das Werkstück in Drehung versetzt und der Spindelstock fährt das Werkstück in Richtung der Z-Achse gegen den Bohrer und stellt dadurch die zentrale Mittenbohrung in dem Werkstück her.

In entsprechender Weise können auch Gewindebohrer oder Schneideisen, die selbst nicht angetrieben sind, eingesetzt werden.

Selbstverständlich ist es auch möglich, an dem Werkzeugschlitten angetriebene Werkzeuge, wie zum Beispiel Bohrer, Gewindebohrer, Fingerfräser oder Schleifwerkzeuge anzubringen. Der Antrieb dieser Werkzeuge ist keine Bearbeitungsachse im Sinne der Erfindung. Bei solchen Werkzeugen ist es auch möglich, zum Beispiel eine Querbohrung in Richtung der X-Achse und somit orthogonal zur Drehachse des Spindelstocks in das Werkstück einzubringen. In entsprechender Weise können auch Gewinde, insbesondere Innengewinde mit einem angetriebenen Gewindebohrer quer zur Drehachse des Spindelstocks in das Werkstück eingebracht werden.

Aus dieser nicht abschließenden Aufzählung von möglichen Bearbeitungsschritten wird deutlich, dass der erfindungsgemäße Langdrehautomat nahezu alle auf einem konventionellen Langdrehautomat mit drei NC-gesteuerten Achsen möglichen Bearbeitungsschritte erlaubt, obwohl er erfindungsgemäß nur zwei NC-gesteuerte Bearbeitungsachsen (Z-Achse und X-Achse) hat. Weil nur zwei Bearbeitungsachsen vorhanden sind, wird der apparative Aufwand, nämlich vor allem die Zahl der Linearführungen, der Achsantriebe, der Wegmesseinrichtungen und der Steuerung signifikant reduziert, was sich in günstigeren Herstellungskosten niederschlägt.

Wenn beim erfindungsgemäßen Langdrehautomaten der Werkzeugschlitten in Richtung der weiteren Achse (Y-Achse) so weit versetzt zu der Drehachse angeordnet ist, dass in jeder Stellung des Werkzeugschlittens ein Abstand zwischen der Drehachse und dem Werkzeugschlitten in Richtung der weiteren Achse größer ist als die Hälfte des maximalen Drehdurchmessers des Langdrehautomaten, dann ist eine Kollision des Werkzeugschlittens mit dem Werkstück mit Sicherheit ausgeschlossen.

In vielen Fällen ist es sinnvoll die Befestigungspunkte für Werkzeuge in Richtung der zweiten Achse so weit voneinander beabstandet anzuordnen, dass selbst ein Stangenmaterial mit dem maximal möglichen Durchmesser zwischen zwei benachbarten Drehmeißeln hindurch geschoben werden kann. Es ist jedoch auch möglich, die Abstände der Befestigungspunkte für Drehnmeissel kleiner als den maximalen Drehdurchmesser des Langdrehautomaten zu wählen. Dann kann es vorkommen, dass vor allem, wenn Stangenmaterial mit großem Durchmesser bearbeitet werden soll, nicht an allen Befestigungspunkten ein Drehwerkzeug befestigt werden kann.

Der Verfahrweg des Werkzeugschlittens in Richtung der X-Achse ist sehr viel größer als der maximale Drehdurchmesser der Langdrehautomaten. Beispielsweise kann bei einem Drehdurchmesser von 32 mm, der Verfahrweg des Werkzeugschlittens 350 mm betragen. Damit ist es möglich, beispielsweise im Abstand von 35 bis 100 mm mehrere Werkzeuge beabstandet zueinander auf dem Werkzeugschlitten anzuordnen. Je nachdem in welche Position der Werkzeugschlitten gefahren wird, ist eines der auf dem Werkzeugschlitten befestigten Werkzeuge im Eingriff mit dem Werkstück und die anderen auf dem Werkzeugschlitten befestigten Werkzeuge sind soweit von der Drehachse des Spindelstocks entfernt, dass eine Kollision mit dem Werkstück ausgeschlossen werden kann.

Die Kosten für einen etwas längeren Verfahrweg des Werkzeugschlittens gegenüber herkömmlichen Langdrehautomaten sind vernachlässigbar und haben den positiven Nebeneffekt, dass der Werkzeugschlitten wegen der langen Führung sehr präzise geführt ist. Infolge dessen wird die Bearbeitungsqualität der mit einem erfindungsgemäßen Langdrehautomaten hergestellten Werkstücke verbessert.

Der erfindungsgemäße Langdrehautomat weist ein Maschinenbett mit einer Linearführung für den Spindelstock und eine Befestigung für die Führungsbuchsenaufnahme auf. Ein solches Maschinenbett ist von der konstruktiven Seite her einfach zu gestalten und gleichzeitig sehr robust und schwingungsunempfindlich aufgebaut. Dadurch wird eine hohe Präzision der bearbeiteten Werkstücke erreicht.

In vorteilhafter Ausgestaltung der Erfindung ist vorgesehen, dass die Führungsbuchsenaufnahme und die Linearführung für den Werkzeugschlitten zu einem Bauteil zusammengefasst sind. Damit wird die Zahl der großen und präzise zu bearbeitenden Bauteile reduziert. Gleichzeitig ergibt sich eine sehr kompakte Bauweise des erfindungsgemäßen Langdrehautomaten.

Es ist erfindungsgemäß möglich, dass die X-Achse des Werkzeugschlittens horizontal oder vertikal verläuft. Kombinationen der beiden Ausführungsformen sind möglich und so lassen sich mit beiden Ausführungsformen die Vorteile der erfindungsgemäßen Langdrehautomaten vollumfänglich realisieren.

Die eingangsgenannte Aufgabe wird auch durch ein Verfahren zum Bearbeiten von Werkstücken auf einem erfindungsgemäßen Langdrehautomaten nach dem Anspruch 10 gelöst. Die Vorteile dieses Verfahrens wurden bereits im Zusammenhang mit dem erfindungsgemäßen Langdrehautomaten weiter oben erläutert, so dass auf eine Wiederholung an dieser Stelle verzichtet wird.

Weitere Vorteile und vorteilhafte Ausgestaltungen der Erfindung sind den nachfolgenden Zeichnungen, deren Beschreibung und den Patentansprüchen entnehmbar. Alle in der Zeichnung, deren Beschreibung und den Patentansprüchen, genannten Merkmale können sowohl einzeln als auch in beliebiger Kombination miteinander erfindungswesentlich sein.

Es zeigen:
Figur 1 eine schematische Darstellung der wichtigsten Baugruppen des erfindungsgemäßen Langdrehautomaten,
Figur 2 eine isometrische Darstellung der Führungsbuchsenaufnahme und des Werkzeugschlittens eines erfindungsgemäßen Langdrehautomaten mit horizontaler X-Achse,
Figur 3 eine Ansicht von vorne auf den Werkzeugschlitten eines erfindungsgemäßen Langdrehautomaten,
Figur 4 ein Ausführungsbeispiel eines erfindungsgemäßen Langdrehautomaten in vertikaler Ausführung,
Figur 5a und b isometrische Darstellungen des erfindungsgemäßen Langdrehautomaten,
Figur 6 weitere Ansichten eines erfindungsgemäßen Langdrehautomaten sowie
Figuren 7 und b Ansichten erfindungsgemäßer Drehmeißel.

### Beschreibung der Ausführungsbeispiele

Aus Gründen der Übersichtlichkeit werden in den Figuren nicht immer alle Bezugszeichen eingetragen. Jedes Bezugszeichen ist jedoch mindestens einmal dargestellt und kann gedanklich auf die anderen Figuren übertragen werden.

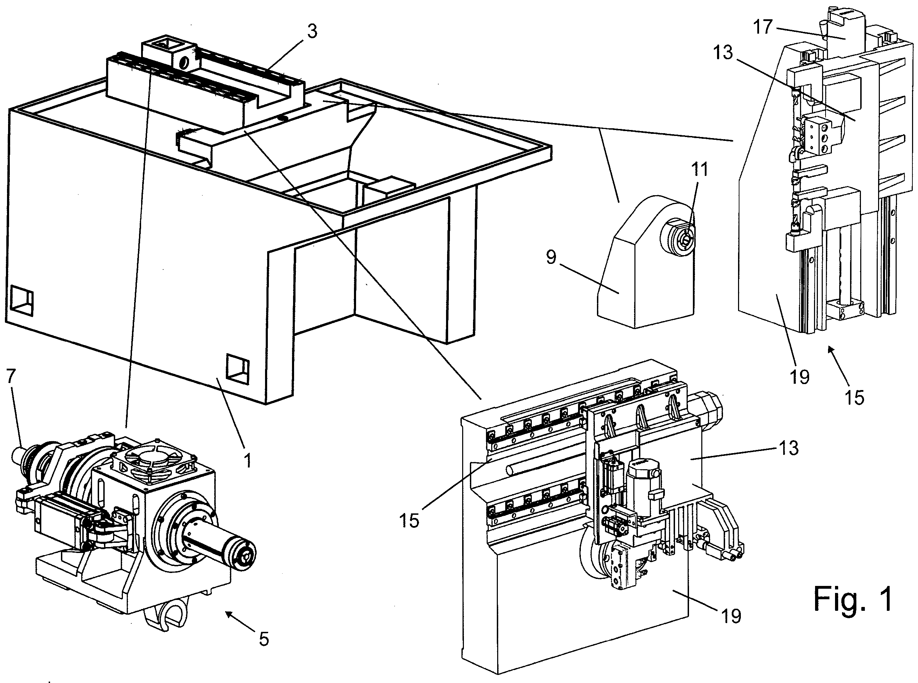

In der Figur 1 werden gewissermaßen in der Art einer Explosionsansicht die wichtigsten Baugruppen des erfindungsgemäßen Langdrehautomaten dargestellt. Der Langdrehautomat umfasst ein Maschinenbett 1 an dem eine Linearführung 3 für den Spindelstock 5 ausgebildet ist. Der Spindelstock 5 umfasst neben dem Gegenstück für die Linearführung 3 einen integrierten Spindelantrieb und eine Klemmvorrichtung für das Stangenmaterial 7 (nicht sichtbar in der Figur 1) aus dem später das fertige Werkstück hergestellt wird. Auf dem Maschinenbett wird eine Führungsbuchsenaufnahme 9 mit je einer Führungsbuchse 11 befestigt. Die Führungsbuchse 11 dient dazu, das Stangenmaterial 7 in unmittelbarer Nähe der zerspanenden Bearbeitung zu stützen und somit eine genaue Bearbeitung mit hoher Zerspanleistung zu ermöglichen, obwohl das Stangenmaterial 7 einen relativ kleinen Durchmesser aufweist. Langdrehautomaten werden üblicherweise für Drehdurchmesser bis 38 mm hergestellt.

In der Figur 1 auf der rechten Seite sind zwei alternative Ausführungsformen eines erfindungsgemäßen Werkzeugschlittens 13 dargestellt. Bei dem in Figur 1 rechts oben dargestellten Ausführungsbeispiel ist der Werkzeugschlitten 13 in vertikaler Richtung (siehe die X-Achse) verfahrbar. Dies bedeutet, dass eine Führungskonsole 19 eine Linearführung 15 des Werkzeugschlittens 13 aufweist, die vertikal ausgerichtet ist. In die Führungskonsole 19 können die und die Führungsbuchse 11 integriert werden. Im Zusammenhang mit der Erfindung kann die Führungskonsole 19 mit oder ohne Führungsbuchsenaufnahme 9 realisiert werden.

Bei dem in Figur 1 rechts unten dargestellten Ausführungsbeispiel ist die X-Achse in horizontaler Richtung ausgerichtet, so dass die Linearführung 15 horizontal ausgerichtet ist. Bei diesem Ausführungsbeispiel ist die Führungsbuchsenaufnahme 9 in die Führungskonsole 19 integriert. Dadurch wird Bauraum eingespart und die Zahl der Komponenten wird reduziert.

Beide Ausführungsformen sind bei dem erfindungsgemäßen Langdrehautomaten möglich. In dem in Figur 1 dargestellten Ausführungsbeispiel ist der Werkzeugschlitten 13 jeweils mit einer Linearführung 15 und einem Stellmotor 17 ausgestattet. Ein Teil der Linearführung 15 ist auf der Führungskonsole 19 angeordnet, die wiederum mit dem Maschinenbett 1 verschraubt oder auf andere Weise verbunden werden kann.

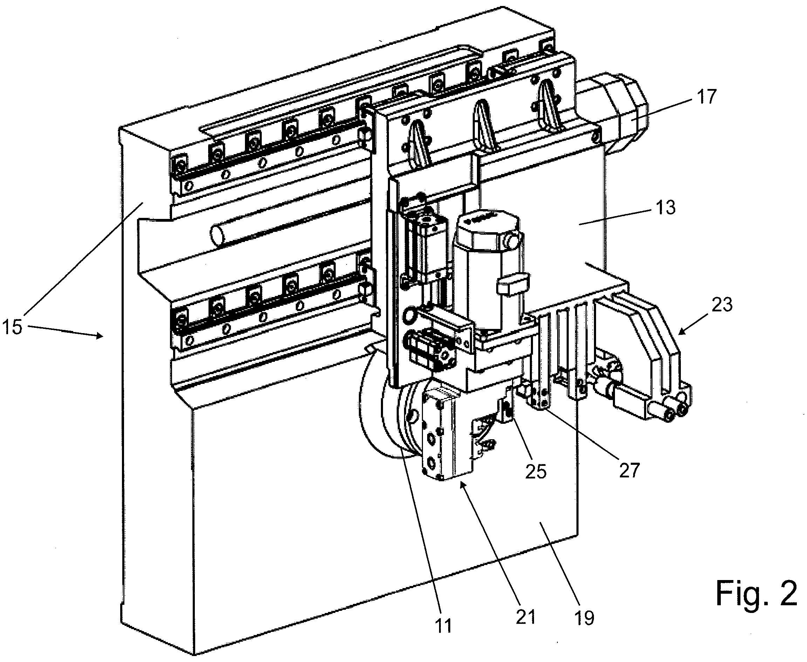

In den meisten Fällen ist es sinnvoll und vorteilhaft, die Führungsbuchsenaufnahme 9 bzw. die Führungsbuchse 11 in die Führungskonsole 19 zu integrieren. Diese Konfiguration ist in der Figur 2 dargestellt. Es handelt sich dabei um eine Ausführungsform des erfindungsgemäßen Langdrehautomaten mit horizontal verlaufender X-Achse. Die Linearführung 15, der Stellantriebsmotor 17 und Wegmesseinrichtungen (ohne Bezugszeichen) sind Stand der Technik und können von vielen Herstellern als Zukaufteil bezogen werden.

Wichtig im Zusammenhang mit der Erfindung ist es jedoch, dass der Werkzeugschlitten 13 bei diesem Ausführungsbeispiel oberhalb der Drehachse der Führungsbuchse 11 angeordnet ist. Dies hat die Folge, dass der Werkzeugschlitten 13 in Richtung der X-Achse verfahren werden kann, ohne dass er mit einem zu bearbeitenden Werkstück (nicht dargestellt in Figur 2) kollidiert, das durch die Führungsbuchse 11 in den Bearbeitungsraum ragt.

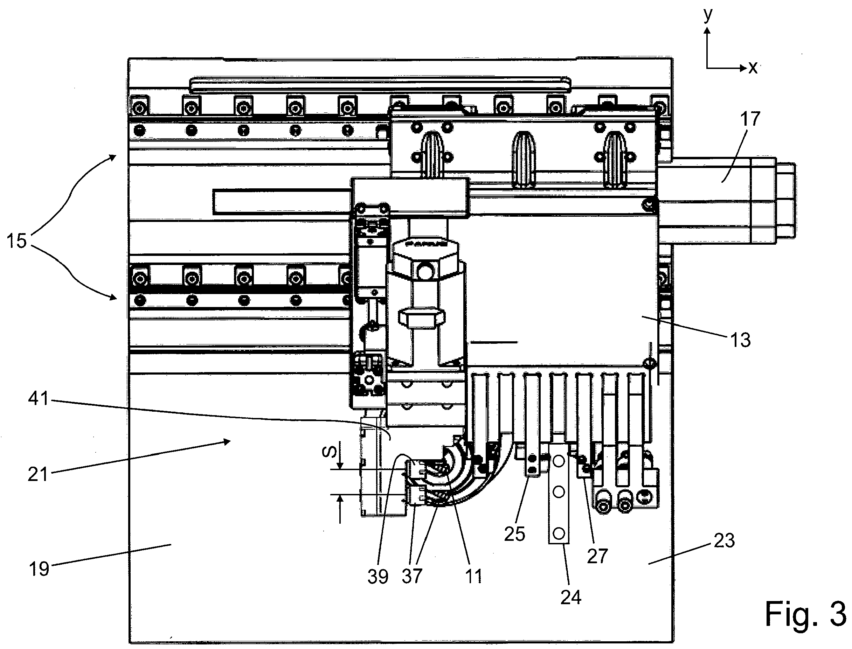

An dem Werkzeugschlitten 13 sind verschiedene angetriebene und nicht angetriebene Werkzeuge befestigt. Von links nach rechts sind dies ein Werkzeug 21 mit zwei angetriebenen Bohrern, die Bohrungen in Richtung der X-Achse (Querbohrungen) in das Werkstück (nicht dargestellt) einbringen kann. Ganz rechts ist ein Kombinationswerkzeug 23 angeordnet, das einen Spiralbohrer, einen Gewindebohrer und einen Senker (nicht sichtbar) umfasst. Das Kombinationswerkzeug 23 ist in der Figur 2 teilweise von einem Werkstückanschlag 24 verdeckt. In der Figur 3 ist es besser erkennbar. Der Werkstückanschlag 24 dient dazu, die vordere Stirnseite des Werkstücks bzw. des Stangenmaterial sehr genau und reproduzierbar zu positionieren bevor die eigentliche Bearbeitung beginnt. Dann können auch Werkstücke bearbeitet werden, die länger sind als der Verfahrweg des Spindelstocks 5 in Z-Richtung.

Spiralbohrer, Gewindebohrer und Senker sind in Richtung der Z-Achse ausgerichtet und zwar genau auf Höhe der Z-Achse. Dadurch ist es möglich eine Längsbohrung und/oder ein Innengewinde in das Werkstück einzubringen.

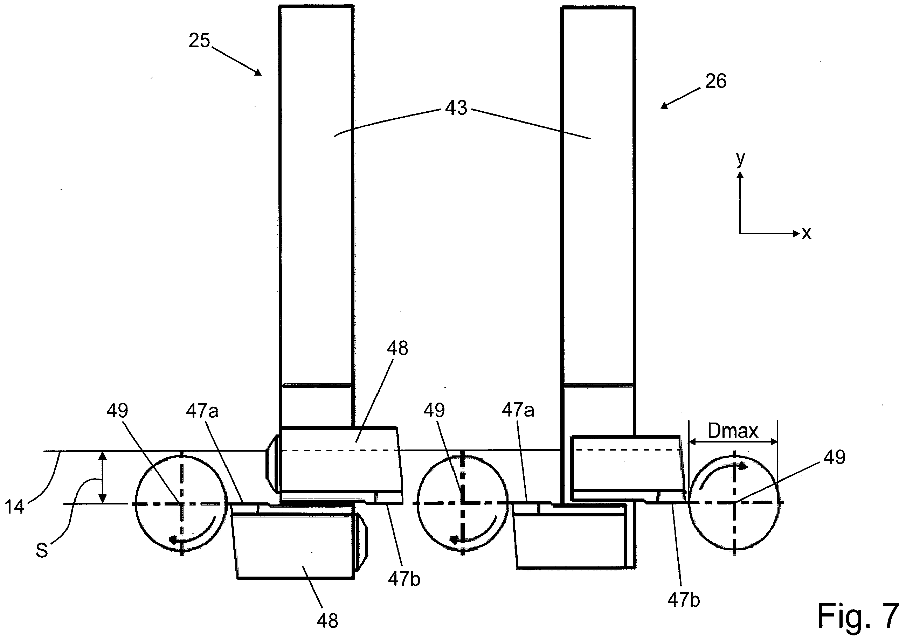

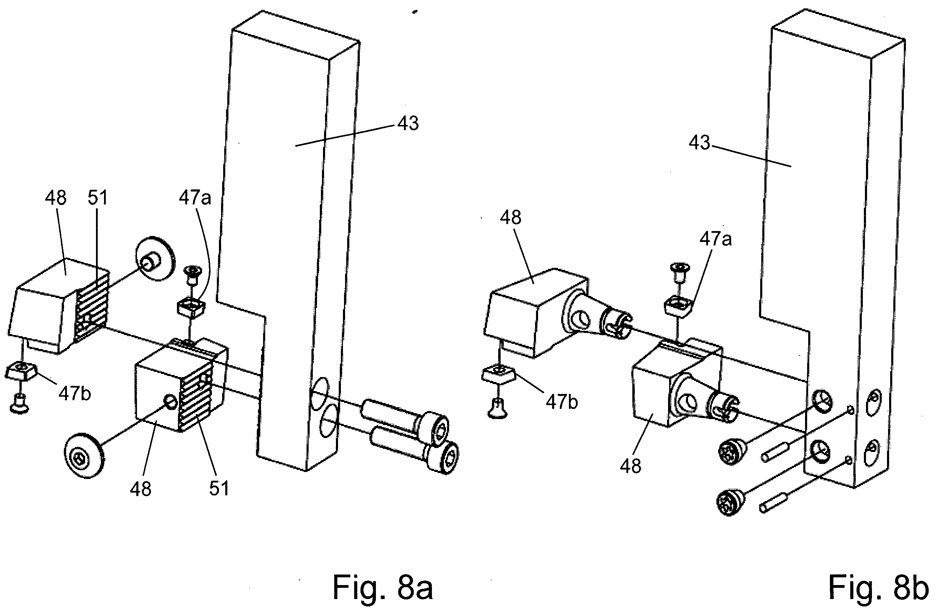

Zwischen dem Werkzeug 21 mit angetriebenen Bohrern und dem Kombinationswerkzeug 23 sind zwei nur schematisch dargestellte Drehmeißel 25 und 27 angeordnet. In den Figuren 7 und 8 werden Drehmeißel, die für den Einsatz in dem erfindungsgemäßen Langdrehautomaten geeignet sind, näher erläutert.

Selbstverständlich ist diese Aufzählung von angetriebenen und nicht angetriebenen Werkzeugen nicht abschließend. Sie dient nur zur Erläuterung der verschiedenen Möglichkeiten, die das erfindungsgemäße Maschinenkonzept bietet. Details der Werkzeuge werden weiter unten erläutert.

In der Figur 2 ist der Werkzeugschlitten 13 nahezu ganz nach rechts in der Linear-Führung 15 verfahren, so dass sich das angetriebene Werkzeug 21 in unmittelbarer Nähe der Führungsbuchse 11 befindet und somit eine Querbohrung in das nicht dargestellte Werkstück eingebracht werden kann. Die Vorschubbewegung dieses Werkzeugs 21 verläuft in Richtung der X-Achse und wird vom Werkzeugschlitten 13, bzw. dessen Stellmotor 17 erzeugt.

Wenn nun beispielsweise der Drehmeißel 25 für eine Drehbearbeitung eingesetzt werden soll, dann wird das Werkstück (nicht dargestellt) in die Führungsbuchse 11 zurückgezogen, so dass der Werkzeugschlitten 13 in Richtung der X-Achse so weit verfahren werden kann, bis sich der Drehmeißel 25 in unmittelbarer Nähe der Führungsbuchse 11 befindet. In diesem Fall sind dann die Werkzeuge 27 und 23 rechts von der Z-Achse beziehungsweise rechts von der Führungsbuchse 11 angeordnet. Anschließend kann mit dem Drehmeißel 25 die gewünschte Drehbearbeitung durchgeführt werden. In diesem Fall wird die Vorschubbewegung vom Spindelstock 5 in Richtung der Z-Achse erzeugt. Der Werkzeugschlitten 13, bzw. dessen Stellmotor 17, erzeugt die Zustellbewegung in Richtung der X-Achse.

In entsprechender Weise ist es möglich, durch Zurückziehen des Werkstücks in die Führungsbuchse 11 und Verfahren des Werkzeugschlittens 13 entlang der X-Achse jedes der Werkzeuge 21 bis 27 nacheinander in unmittelbarer Nähe der Führungsbuchse 11 und damit in Bearbeitungsbereich des erfindungsgemäßen Langdrehautomaten zu bringen.

Der Werkzeugschlitten 13 hat zwei Hauptaufgaben, nämlich den Werkzeugwechsel und die Zustellung. Dadurch benötigt der erfindungsgemäße Langdrehautomat nur zwei NC-gesteuerte Achsen (Z-Achse und X-Achse).

In der Figur 3 ist das erfindungsgemäße Maschinen- und Bearbeitungs-Konzept in einer Ansicht von vorne dargestellt. Gleiche Bauteile werden mit den gleichen Bezugszeichen versehen und es gilt das bezüglich der Figur 2 Gesagte entsprechend.

Das Werkzeug 21 ist ein angetriebenes Bohrwerkzeug mit zwei Spindeln 37 und 39. Die Spindeln 37 und 39 haben einen Abstand S in Richtung der Y-Achse. In der Figur 3 ist die Spindel 39 auf Spitzenhöhe.

Die Spindeln 37 und 39 sind auf einem schlitten 41 montiert. Der Schlitten 41 kann zwischen zwei Endanschlägen (nicht sichtbar in Figur 3) in Richtung der Y-Achse verfahren werden. Der Abstand der Endanschläge entspricht dem Abstand S der Spindeln, so dass je nachdem an welchem Anschlag sich der Schlitten 41 befindet, sich die Spindel 37 oder die Spindel 39 auf Spitzenhöhe befindet und zur Bearbeitung eingesetzt werden kann.

Die Bewegung des Schlittens 41 zwischen den Endanschlägen (nicht dargestellt) erfordert keine NC-gesteuert dritte Achse. Vielmehr reicht ein einfacher pneumatisch, hydraulisch oder elektrisch betätigter Stellzylinder aus. Die Endanschläge lassen sich justieren, so dass beide Spindeln 37, 39 genau auf Spitzenhöhe gebracht werden können. Damit lassen sich auf einfachste Weise weitere optionale Bearbeitungsmöglichkeiten realisieren.

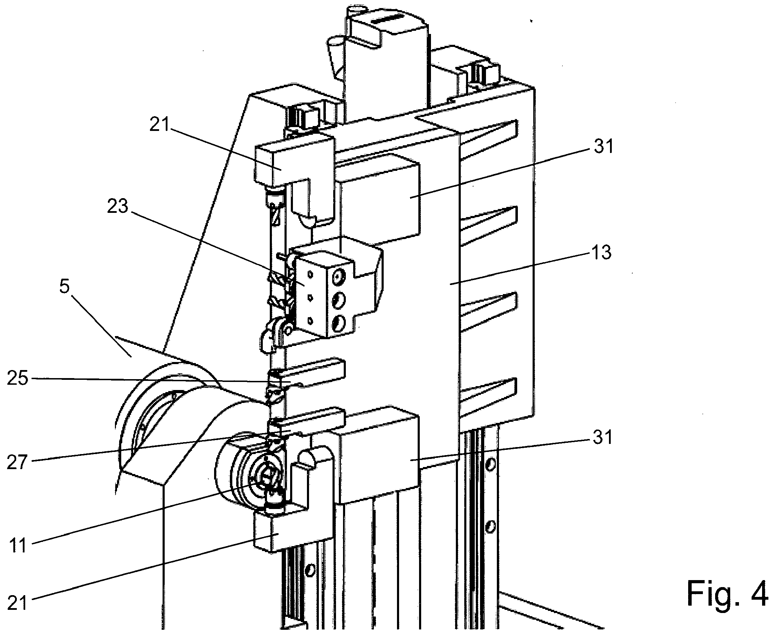

Es ist selbstverständlich auch möglich, das Bohrwerkzeug 21 mit nur einer Spindel 37 auszurüsten, die auf Spitzenhöhe eingestellt wird. Dann können der Schlitten 41 und dessen Antrieb entfallen. Eine solche Konfiguration ist in der Figur 4 dargestellt. In dieser Ansicht ist ein Antriebsmotor 31 für das angetriebene Werkzeug 21 zu erkennen. Es kann sich dabei zum Beispiel um einen Spiralbohrer, einen Fingerfräser oder ein anderes Werkzeug handeln.

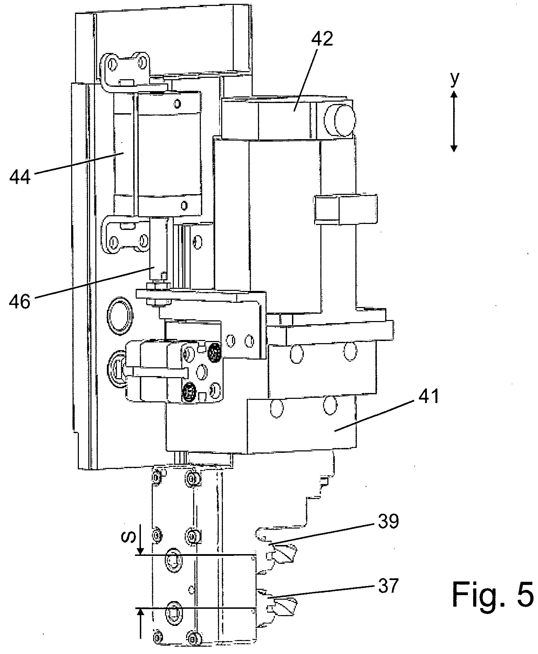

In der Figur 5 ist das angetriebene Werkzeug 21 mit zwei Spindeln 37 und 39 etwas detaillierter dargestellt. Der Endanschlag 44 umfasst eine Anschlagstange 46 und erlaubt eine Bewegung des Schlittens 41 zwischen zwei Endpositionen. In den Endanschlag 44 können Endlagenschalter oder eine andere Art der Endlagenerfassung integriert sein. Dadurch kann die Maschinen-Steuerung die Position der Spindeln 37, 39 auf einfachste Weise überwachen. Ein Antrieb für den Schlitten 41 ist mit 42 bezeichnet.

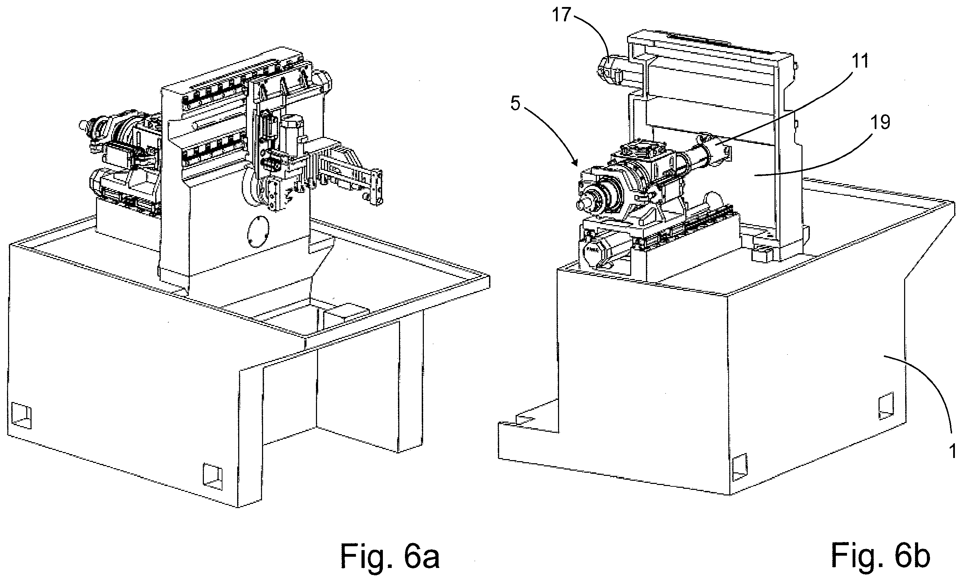

In der Figur 6 ist ein Ausführungsbeispiel des erfindungsgemäßen Langdrehautomaten in zwei Isometrien einmal von vorne (Fig. 6a) und einmal von hinten (Fig. 6b) dargestellt. Aus Gründen der Übersichtlichkeit wurden nur wenige Bezugszeichen eingetragen.

In der Figur 6b wird deutlich, dass die erfindungsgemäße Maschine zum Langdrehen eingesetzt werden kann. Es ist jedoch auch ohne weiteres möglich, die Maschine zum Kurzdrehen einzusetzen. Dann wird die Führungsbuchse 11 entfernt und der Spindelstock 5 in Richtung der Führungskonsole 19 verschoben.

Aus der Figur 6 ist besonders der kompakte Aufbau des erfindungsgemäßen Langdrehautomaten zu erkennen und die unter anderem auch daraus resultierende große Steifigkeit des Maschinenbetts 1 und der Führungskonsole 19. Daraus resultieren hohe Zerspanleistungen bei gleichzeitiger sehr guter Präzision.

In den Figuren 7 und 8 sind Drehmeißel 25, 26 dargestellt, die in dem erfindungsgemäßen Langdrehautomaten vorteilhafterweise eingesetzt werden können. Durch den Einsatz der erfindungsgemäßen Drehmeißel 25, 26 kann die Produktivität der Drehmaschine weiter gesteigert werden. Außerdem kann der Verfahrweg des Schlittens 13 in Richtung der X-Achse nahezu halbiert werden. Dadurch werden Bauraum und Herstellungskosten eingespart.

Die Drehmeißel 25, 26 und 27 (siehe zum Beispiel Figur 3 und 4) haben einen Schaft 43 mit dem sie an dem Werkzeugschlitten 13 befestigt sind (nicht dargestellt in Figur 7). Der Schaft 43 erstreckt sich in Richtung der Y-Achse, so dass eine oder mehrere Schneidplatten 47 auf Spitzenhöhe positioniert sind. Die Spitzenhöhe ist mit 49 bezeichnet. Ein maximaler (Dreh-)Durchmesser eines Werkstücks ist mit Dₘₐₓ bezeichnet. Die Drehrichtung bei der Bearbeitung ist durch gekrümmte Pfeile angedeutet.

Die Schneidplatten 47a und 47b eines Drehmeißels sind um 180° verdreht zueinander angeordnet. Dadurch sind die Spanflächen der Schneidplatten 47a und 47 b so ausgerichtet, dass die Drehrichtung des Werkstücks beibehalten werden kann.

Wenn man bei der Drehbearbeitung zuerst mit der Schneidplatte 47b des Drehmeißels 25 und direkt anschließend mit der Schneidplatte 47a des Drehmeißels 26 das Werkstück bearbeitet, dann muss der Antrieb des Werkstücks nicht unterbrochen werden. Das spart Zeit und elektrische Energie bei der spandenden Bearbeitung des Werkstücks. Außerdem wird der Antrieb des Spindelstocks entlastet.

Der Abstand zwischen der Schneidplatte 47b des Drehmeißels 25 und der Schneidplatte 47a des Drehmeißels 26 ist nur geringfügig größer als der maximale Drehdurchmesser Dₘₐₓ des Langdrehautomaten. Dadurch kann der Verfahrweg des Schlittens 13 minimiert werden.

In der Figur 7 ist eine Unterkante 14 des Werkzeugschlittens 13 eingetragen. Damit eine Kollision des Werkstücks mit dem Schlitten 13 ausgeschlossen wird, muss ein Abstand S zwischen der Unterkante 14 des Werkzeugschlittens 13 und der Drehachse 49 des Werkstücks größer als 0,5 x der maximale Durchmesser Dₘₐₓ sein (S > 0,5 x Dₘₐₓ)

Der Schaft 43 ist an seinem in Figur 7 unteren Ende so ausgestaltet bzw. abgewinkelt, dass eine Aufnahme 48 die Schneidplatte 47 etwa in Richtung der X-Achse, d. h. waagerecht in Figur 7, und auf Spitzenhöhe 49 hält. Durch diese Anordnung und Ausgestaltung der Drehmeißel 25, 26, und 27 kann der Werkzeugschlitten 13 bzw. die NC-gesteuerte X-Achse die Zustellbewegung für die Drehmeißel 25, 26, 27 und weitere Werkzeuge während der (Dreh-)Bearbeitung übernehmen.

Der Schaft 43 und die Aufnahmen 48 können aus einem Stück hergestellt werden. Alternativ dazu können die erfindungsgemäßen Drehmeißel aus zwei oder mehr Teilen gebaut werden.

In der Figur 8 sind zwei Varianten gebauter Drehmeißel dargestellt. In der Figur 8 a ist ein Ausführungsbeispiel dargestellt bei dem die Aufnahmen 48 mit dem Schaft 43 verschraubt sind. Um eine exakte und reproduzierbare Positionierung der Aufnahmen 48 relativ zu dem Schaft 43 und zueinander zu gewährleisten sind in den Kontaktflächen komplementäre Nuten 51, bevorzugt mit dreieckigem oder trapezförmigem Querschnitt, eingearbeitet. Wenn die Aufnahmen 48 mit dem Schaft 43 verschraubt werden, dann positionieren die Nuten 51 die Teile 48 und 43 relativ zueinander und übertragen Kräfte und Momente.

In der Figur 8b ist eine Variante dargestellt, die auf dem System der Firma W & F Werkzeugtechnik basiert. Details hierzu sind der DE 103 05 601 A entnehmbar.

Anders ausgedrückt: Die Drehmeißel 25, 26, 27, welche zum Einsatz auf einem erfindungsgemäßen Langdrehautomaten geeignet sind, umfassen einen Schaft 43, mindestens eine Aufnahme 48 für eine Schneidplatte 47 und eine Schneidplatte 47.

Es hat sich besonders bewährt, wenn die mindestens eine Aufnahme 48 für die Schneidplatte 47 orthogonal zu einer Längsachse des Schafts 43 angeordnet ist.

## Patentansprüche

1. Langdrehautomat mit einem in Richtung einer Drehachse (Z-Achse) verschiebbaren Spindelstock (5), einer Führungsbuchse (9) und einem Werkzeugschlitten (13), wobei der Werkzeugschlitten (13) orthogonal zu der Drehachse (Z-Achse) des Spindelstocks (5) in Richtung einer zweiten Achse (X-Achse) verschiebbar ist, wobei der Werkzeugschlitten (13) orthogonal zu der Drehachse (Z-Achse) des Spindelstocks (5) und in Richtung einer weiteren Achse (Y-Achse) versetzt zu der Drehachse (Z-Achse) angeordnet ist, wobei an dem Werkzeugschlitten (13) mehrere Befestigungspunkte für Werkzeuge (21, 23, 25, 27, 29) ausgebildet ist, **dadurch gekennzeichnet, dass** die zweite Achse (X-Achse) sowohl zum Wechsel als auch zur Zustellung der Werkzeuge (25, 27) eingesetzt wird.

2. Langdrehautomat nach Anspruch 1, **dadurch gekennzeichnet, dass** die Befestigungspunkte zur Aufnahme von feststehenden Werkzeugen, insbesondere Drehmeißeln (25, 26, 27), Schneideisen, Bohrern und/oder Gewindebohrern eingerichtet sind.

3. Langdrehautomat nach einem der vorhergehenden Ansprüche, **dadurch gekennzeichnet, dass** die Befestigungspunkte zur Aufnahme von angetriebenen Werkzeugen (21, 35) insbesondere Bohrern, Gewindebohrern, Fräsern und Schneideisen, eingerichtet sind.

4. Langdrehautomat nach einem der vorhergehenden Ansprüche, **dadurch gekennzeichnet, dass** der Werkzeugschlitten (13) in Richtung der weiteren Achse (Y-Achse) so weit versetzt zu der Drehachse (Z-Achse) angeordnet ist, dass in jeder Stellung des Werkzeugschlittens (13) ein Abstand () zwischen der Drehachse (Z-Achse) und dem Werkzeugschlitten (13) in Richtung der weiteren Achse (Y-Achse) größer ist als die Hälfte des maximalen Drehdurchmessers des Langdrehautomaten.

5. Langdrehautomat nach einem der vorhergehenden Ansprüche, **dadurch gekennzeichnet, dass** die Befestigungspunkte für Werkzeuge (21, 23, 25, 27, 29) in Richtung der zweiten Achse (X-Achse) einen Abstand voneinander aufweisen, der gleich oder größer ist als der maximale Drehdurchmesser des Langdrehautomaten.

6. Langdrehautomat nach einem der vorhergehenden Ansprüche, **dadurch gekennzeichnet, dass** er ein Maschinenbett (1) mit einer (Linear-)Führung (Z-Achse) für den Spindelstock (5), eine Befestigung für die Führungsbuchsenaufnahme (9) umfasst.

7. Langdrehautomat nach einem der vorhergehenden Ansprüche, **dadurch gekennzeichnet, dass** die (Linear-)Führung (X-Achse) für den Werkzeugschlitten (13) an einer Führungskonsole (19) oder dem Maschinenbett (1) ausgebildet ist.

8. Langdrehautomat nach einem der vorhergehenden Ansprüche, **dadurch gekennzeichnet, dass** die Führungsbuchse (9) an ihrer dem Spindelstock (5) zugewandten Seite einen Zentrierkonus für das Werkstück aufweist.

9. Langdrehautomat nach einem der vorhergehenden Ansprüche, **dadurch gekennzeichnet, dass** die (Linear-)Führung (Z-Achse) für den Spindelstock (5) in horizontaler Richtung verläuft, und dass die (Linear-)Führung (X-Achse) für den Werkzeugschlitten (13) in horizontaler oder vertikaler Richtung verläuft.

10. Langdrehautomat nach einem der vorhergehenden Ansprüche, **dadurch gekennzeichnet, dass** ein Verfahr-Weg des Werkzeugschlittens (13) mehr als das 5-fache, bevorzugt mehr als das 10-fache des maximalen Drehdurchmessers bzw. des Durchmessers der Führungsbuchse (11) beträgt.

11. Langdrehautomat nach einem der vorhergehenden Ansprüche, **dadurch gekennzeichnet, dass** an dem Werkzeugschlitten (13) ein Anschlag (24) angeordnet ist.

12. Verfahren zum Bearbeiten von Werkstücken auf einem Langdrehautomat nach einem der vorhergehenden Ansprüche, **dadurch gekennzeichnet, dass** ein auf dem Werkzeugschlitten (13) angeordnetes Werkzeug (25, 27) aktiviert wird, indem
das in dem Spindelstock (5) gespannte Werkstück in Richtung der Z-Achse hinter die an dem Werkzeugschlitten (13) befestigten Werkzeuge (21, 23, 25, 26, 27, 29, 35) zurückgezogen wird,
anschließend der Werkzeugschlitten (13) so weit in Richtung der X-Achse verfahren wird, bis sich das gewünschte Dreh-Werkzeug (25, 26, 27) in unmittelbarer Nähe der Drehachse (Z-Achse) befindet und
daran anschließend der Spindelstock (5) die Vorschubbewegung ausführt, während der Werkzeugschlitten (13) eine oder mehrere Zustellbewegungen in Richtung der X-Achse ausführt.

13. Verfahren nach Anspruch 12, **dadurch gekennzeichnet, dass** die Bearbeitung des Werkstücks mit Hilfe eines angetriebenen oder feststehenden Werkzeugs (23) erfolgt, dass die Vorschubrichtung des Werkzeugs (23) in Richtung der Z-Achse verläuft, und dass der Spindelstock (5) die Vorschubbewegung ausführt.

14. Verfahren nach Anspruch 12, **dadurch gekennzeichnet, dass** die Bearbeitung des Werkstücks mit Hilfe eines angetriebenen oder feststehenden Werkzeugs (21) erfolgt, dass die Vorschubrichtung des Werkzeugs (21) in Richtung der X-Achse verläuft, und dass der Werkzeugschlitten (13) die Vorschubbewegung ausführt.

15. Verfahren nach einem der Ansprüche 12 bis 14, **dadurch gekennzeichnet, dass** der Spindelstock (5) eine Spindel umfasst, und dass die Spindel antreibbar und in dem Spindelstock (13) arretierbar ist.
